# EUROPEAN PATENT SPECIFICATION

(11) **EP 1 657 504 B1**
(45) Date of publication and mention of the grant of the patent: **26.01.2011**
(21) Application number: 05012267.0
(22) Date of filing: 07.06.2005
(51) Int. Cl.: F24F 11/00

(54) **Abnormal state detecting apparatus of multi-type air conditioner and method thereof**
Vorrichtung zur Erfassung anormaler Zustände von einer Mehrstationsklimaanlage und zugehöriges Verfahren
Dispositif et méthode de détection d'état anormal d'un appareil multiple de climatisation

(30) Priority: 26.10.2004 KR 2004085920
(43) Date of publication of application: 17.05.2006
(73) Proprietor: LG Electronics, Inc., Seoul (KR)
(72) Inventor: Lee, Yoon-Been, Seoul (KR); Chang, Se-Dong, Gwangmyeong Gyeonggi-Do (KR); Choi, Song, Gangnam-Gu Seoul (KR); Chung, Baik-Young, Yongjong-Dong Gyeyang-Gu Incheon (KR)
(74) Representative: TER MEER - STEINMEISTER & PARTNER GbR

(56) References cited:
- EP-A- 1 209 427
- US-A- 5 241 833
- PATENT ABSTRACTS OF JAPAN vol. 007, no. 173 (M-232), 30 July 1983 (1983-07-30) & JP 58 075649 A (TOKYO SHIBAURA DENKI KK), 7 May 1983 (1983-05-07)
- PATENT ABSTRACTS OF JAPAN vol. 006, no. 232 (M-172), 18 November 1982 (1982-11-18) & JP 57 131953 A (MATSUSHITA DENKI SANGYO KK), 16 August 1982 (1982-08-16)

## Description

### BACKGROUND OF THE INVENTION

### 1. Field of the Invention

The present invention relates to a multi-type air conditioner, and more particularly, to an abnormal state detecting apparatus of a multi-type air conditioner and a method thereof.

### 2. Description of the Conventional Art

EP1209427 discloses an abnormal state detecting apparatus of an air conditioner comprising a plurality of sensors that monitor among others the ambient temperature and conditioned space temperature. A micro controller is provided with the sensed parameters and a diagnostic program can be performed.

Generally, an air conditioner is an apparatus for controlling the temperature, humidity, the air current, and a clean degree of indoor air for a comfortable indoor atmosphere. According to a construction of units, the air conditioner is largely divided into an integration type air conditioner that an indoor unit and an outdoor unit are mounted in a single case and a separation type air conditioner that a compressor and a condenser are constructed as an outdoor unit and an evaporator is constructed as an indoor unit.

The separation type air conditioner comprises a cooling/heating air conditioner for selectively performing a cooling operation and a heating operation of the air conditioner by switching a flow path of a refrigerant by a flow path switching valve.

Recently, a multi-type air conditioner having a plurality of indoor units for performing a cooling operation or a heating operation according to each space is being increasingly used. The multi-type air conditioner is provided with a plurality of outdoor units respectively having a plurality of compressors in parallel so as to correspond to a driving load of indoor units.

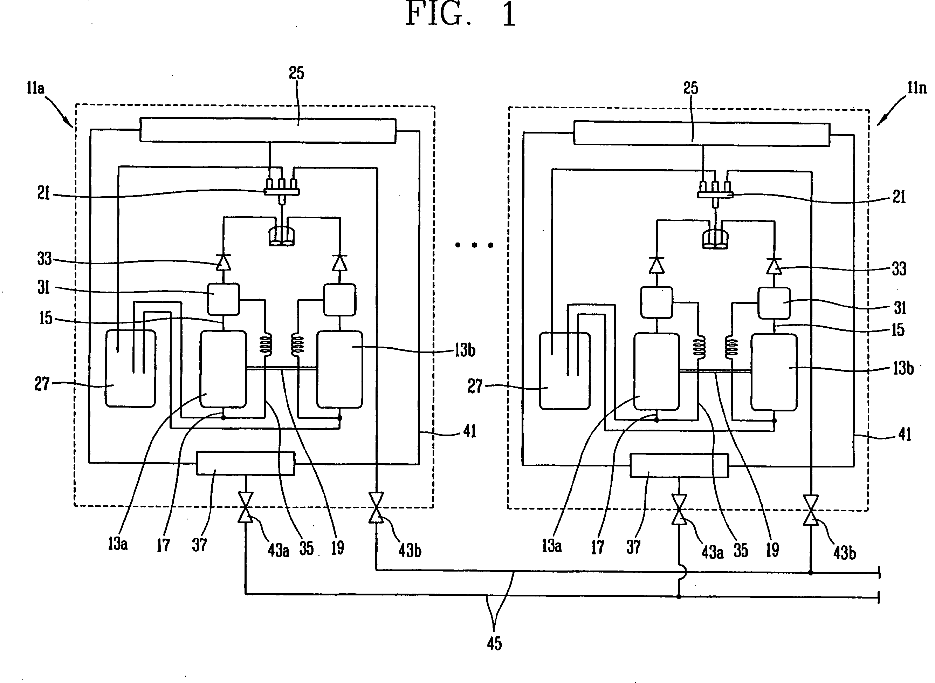

FIG. 1 is a view showing a construction of outdoor units of a multi-type air conditioner in accordance with the conventional art.

As shown, the conventional multi-type air conditioner is provided with a plurality of outdoor units (11a~11n), and a plurality of indoor units (not shown).

The plural outdoor units respectively comprises a pair of first and second compressors 13a and 13b for compressing a refrigerant, a four-way valve 21 for switching a flow path of the refrigerant, an outdoor heat exchanger 25 for exchanging heat of the refrigerant, and an accumulator 27 for providing a refrigerant of a gaseous state to the first compressor 13a and the second compressor 13b.

The first compressor 13a and the second compressor 13b are respectively provided with a discharge pipe 15 for discharging a refrigerant at an upper region thereof, and is provided with a suction pipe 17 of which one side is connected to an accumulator 27 in order to suck a refrigerant at a lower region thereof. An oil balancing pipe 19 for uniformly supplying oil to the first compressor 13a and the second compressor 13b is connected between the first compressor 13a and the second compressor 13b.

The first compressor 13a and the second compressor 13b are provided with an oil separator 31 for separating oil from a refrigerant and a check valve 33 at each discharge side thereof, respectively. The oil separator 31 is provided with an oil recollecting path 35 for recollecting separated oil to each suction side of the first compressor 13a and the second compressor 13b.

A four-way valve 21 for switching a flow path of a refrigerant is provided at a lower side of the check valve 33. The outdoor heat exchanger 25 is connected to a first port of the four-way valve 21, and the accumulator 27 is connected to a second port of the four-way valve 21. Also, one end of a connection pipe 41 connected to the indoor unit is connected to a third port of the four-way valve 21.

A receiver 37 is provided at one side of the outdoor heat exchanger 25 along a flow direction of a refrigerant. Service valves 43a and 43b are respectively provided at each one side of the receiver 37 and the connection pipe 41. Each one side of the service valves 43a and 43b is connected to a main refrigerant pipe 45 for connecting the outdoor units 11a~11n one another.

The conventional multi-type air conditioner is provided with a plurality of indoor units (first to N^{th} indoor unit) and a plurality of outdoor units (first to M^{th} outdoor unit) connected to one another.

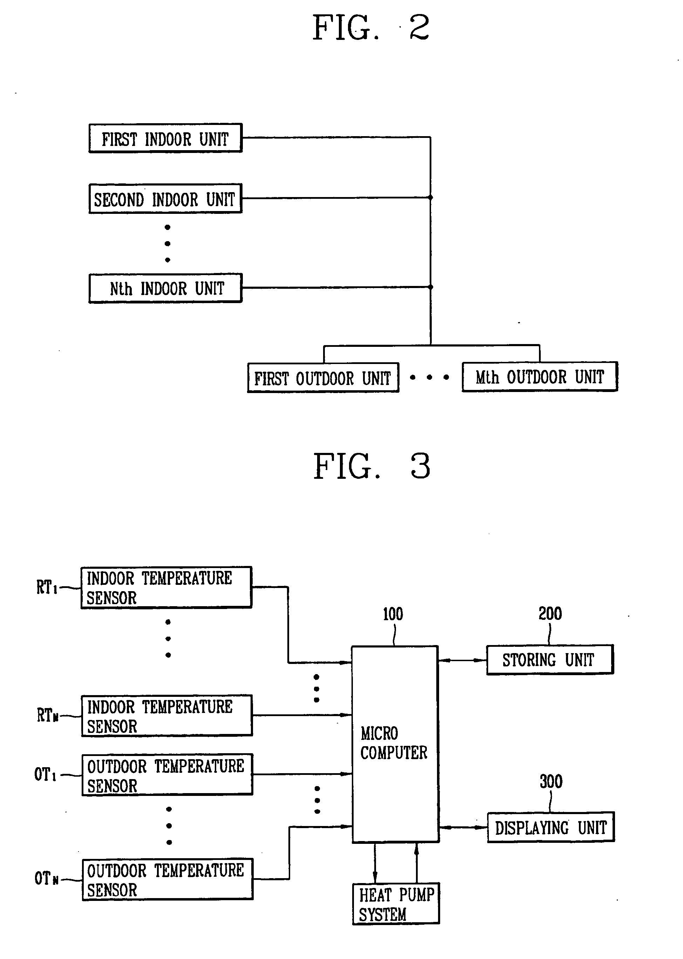

FIG. 2 is a schematic diagram showing a state that plural outdoor units (first to M^{th} outdoor unit) are connected to plural indoor units (first to N^{th} indoor unit).

The plural outdoor units are connected to the plural indoor units by a communication wire, and one of the plural outdoor units is operated by a central controller. The outdoor unit operated by the central controller controls other outdoor units and the plural indoor units (first to N^{th} indoor unit) for a cooling operation or a heating operation.

A user drives the indoor units by using a remote controller, the central controller, etc. of the multi-type air conditioner thusly to check whether a cooling operation of a heating operation of the air conditioner is well performed, thereby checking an abnormal state of the multi-type air conditioner.

However, at the time of installing the plural indoor units and the plural outdoor units of the multi-type air conditioner, an installation inferiority such as an inferior pipe connection, a mis-connection of a communication wire, etc. or a mechanical damage may be generated.

That is, in the conventional multi-type air conditioner, an abnormal state such as an inferior installation or a mechanical damage of the air conditioner is not precisely checked due to a complicated structure of the air conditioner, thereby degrading a function of the air conditioner or causing a mechanical damage of the air conditioner.

### SUMMARY OF THE INVENTION

Therefore, an object of the present invention is to provide an abnormal state detecting apparatus of a multi-type air conditioner capable of detecting an abnormal state of the multi-type air conditioner by operating the air conditioner in different test operation modes according to indoor and outdoor temperatures and then by comparing characteristic data showing an operation state of the air conditioner being operated with a preset reference data at the time of a test operation, and a method thereof.

To achieve these and other advantages and in accordance with the purpose of the present invention, as embodied and broadly described herein, there is provided an abnormal state detecting apparatus of a multi-type air conditioner comprising: a plurality of indoor temperature sensors RT1~RTn for detecting indoor temperatures of indoor zones where a plurality of indoor units are positioned; a plurality of outdoor temperature sensors 0T1~0Tn for detecting outdoor temperatures of outdoor zones where a plurality of outdoor units are positioned; and a micro computer for judging an abnormal state of the multi-type air conditioner by selecting a corresponding test operation mode among a plurality of test operation modes preset according to an average indoor temperature of the detected plural indoor temperatures and an average outdoor temperature of the detected plural outdoor temperatures, by test-operating the multi-type air conditioner according to the selected test operation mode, then by collecting data showing an operation state of the test-operated air conditioner, and then by comparing the collected data with a preset reference data.

To achieve these and other advantages and in accordance with the purpose of the present invention, as embodied and broadly described herein, there is also provided a method for detecting an abnormal state of a multi-type air conditioner comprising: a user's selecting a test operation, and then detecting plural indoor temperatures of indoor zones where a plurality of indoor units are installed and plural outdoor temperatures of outdoor zones where a plurality of outdoor units are installed; selecting a corresponding test operation mode among a plurality of test operation modes preset according to an average indoor temperature of the detected plural indoor temperatures and an average outdoor temperature of the detected plural outdoor temperatures; test-operating the multi-type air conditioner according to the selected test operation mode, and collecting data showing an operation state of the test-operated air conditioner; and comparing the collected data with a preset reference data, and judging an abnormal state of the air conditioner based on the comparison result.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1 is a schematic diagram showing a construction of outdoor units of a multi-type air conditioner in accordance with the conventional art;
FIG. 2 is a schematic diagram showing a state that the plural outdoor units of FIG. 1 are connected to plural indoor units;
FIG. 3 is a block diagram showing a construction of an abnormal state detecting apparatus of a multi-type air conditioner according to the present invention;
FIG. 4 is a graph showing 6 zones divided according to indoor temperatures and outdoor temperatures by which a test operation mode of the multi-type air conditioner according to the present invention is determined; and
FIG. 5 is a flowchart showing a method for detecting an abnormal state of the multi-type air conditioner according to the present invention.

### DETAILED DESCRIPTION OF THE PREFERRED EMBODIMENTS

Reference will now be made in detail to the preferred embodiments of the present invention, examples of which are illustrated in the accompanying drawings.

Hereinafter, with reference to FIGs. 3 to 5, will be explained an abnormal state detecting apparatus of a multi-type air conditioner capable of detecting an abnormal state of the multi-type air conditioner by operating the air conditioner in different test operation modes according to indoor and outdoor temperatures and then by comparing characteristic data showing an operation state of the air conditioner being operated with a preset reference data at the time of a test operation, and a method thereof.

FIG. 3 is a block diagram showing a construction of an abnormal state detecting apparatus of a multi-type air conditioner according to the present invention.

As shown, the abnormal state detecting apparatus of a multi-type air conditioner according to the present invention comprises: a plurality of indoor temperature sensors RT1~RTn for detecting indoor temperatures of indoor zones where a plurality of indoor units are positioned; a plurality of outdoor temperature sensors 0T1~0Tn for detecting outdoor temperatures of outdoor zones where a plurality of outdoor units are positioned; and a micro computer 100 for judging an abnormal state of the multi-type air conditioner by selecting a corresponding test operation mode among a plurality of test operation modes preset according to an average indoor temperature of the detected plural indoor temperatures and an average outdoor temperature of the detected plural outdoor temperatures, by test-operating the multi-type air conditioner according to the selected test operation mode, then by collecting data showing an operation state of the test-operated air conditioner, and then by comparing the collected data with a preset reference data.

The multi-type air conditioner according to the present invention further comprises a storing unit 200 for storing ideal data that indicates a normal operation state of the air conditioner as a reference data, and for storing information of first to sixth zones divided according to the average indoor temperature and the average outdoor temperature and having different test operation modes. Also, the multi-type air conditioner according to the present invention further comprises a displaying unit 300 for displaying an abnormal state of the air conditioner judged by the micro computer 100.

The multi-type air conditioner can be realized as several systems. However, the multi-type air conditioner according to the present invention is realized as a heat pump system (HPS). Hereinafter, the multi-type air conditioner realized as a heat pump system will be explained.

Since the multi-type air conditioner according to the present invention is realized as a heat pump system, data for showing an operation state of the air conditioner includes characteristic values of the heat pump system operated in a cooling mode or a heating mode, that is, a value of a high pressure (P_{H}), a value of a low pressure (P_{L}), a value of a compressor discharge temperature, a value of a liquid pipe temperature, a value of a degree of sub-cooling, a value of a degree of superheat, etc. Referring to FIG. 1, the value of a high pressure (P_{H}) denotes a value of a pressure between the check valve 33 and the four-way valve 21. The value of a low pressure (P_{L}) denotes a value of a pressure between the four-way valve 21 and the accumulator 27. Also, the value of a compressor discharge temperature is a value of a temperature between the first and second compressors 13a and 13b and the oil separator 31. The value of a compressor discharge temperature is measured only for compressors being operated, and the value of a liquid pipe temperature denotes a value of a temperature between the service valve 43a and the outdoor heat exchanger 25. The value of a degree of sub-cooling denotes a difference between the liquid pipe temperature and a saturated temperature corresponding to the value of a high pressure P_{H} on a pressure-enthalpy diagram. Also, the value of degree of superheat denotes a difference between a saturated temperature corresponding to the value of a low pressure P_{L} and a suction temperature of the compressor on a pressure-enthalpy diagram. The suction temperature of the compressor is measured at an inlet of the first compressor 13a, an inlet of the second compressor 13b, or an inlet of the accumulator 27.

The micro computer 100 stops the multi-type air conditioner when it is judged that the air conditioner is in an abnormal state. On the contrary, when it is judged that the air conditioner is in a normal state, the micro computer 100 stops the test operation of the air conditioner after collecting oil inside the air conditioner.

The test operation mode has 6 modes corresponding to first to sixth zones stored in the storing unit 200.

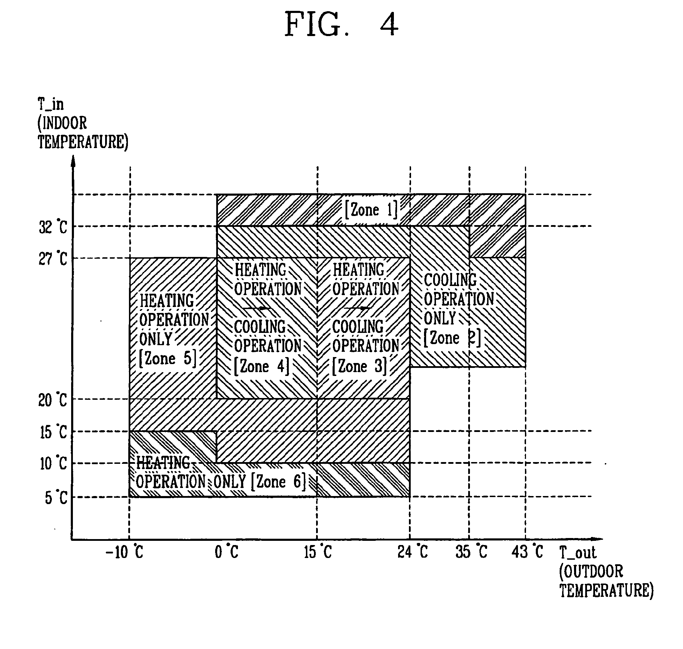

FIG. 4 is a graph showing 6 zones divided according to indoor temperatures and outdoor temperatures in FIG. 3.

As shown in FIG. 4, the first zone is composed of a zone that an average indoor temperature is 32° or more than and an average outdoor temperature is in a range of 0°C~43°C, and a zone that the average indoor temperature is in a range of 27°C~32°C and the average outdoor temperature is in a range of 35°C ~43°C. Also, the second zone is composed of a zone that the average indoor temperature is in a range of 20°C~27°C and the average outdoor temperature is in a range of 24°C~43°C, and a zone that the average indoor temperature is in a range of 27°C~32°C and the average outdoor temperature is in a range of 24°C ~35°C. The third zone is composed of a zone that the average indoor temperature is in a range of 20°C~27°C and the average outdoor temperature is in a range of 12°C~24°C. The fourth zone is composed of a zone that the average indoor temperature is in a range of 20°C~27°C and the average outdoor temperature is in a range of 0°C~12°C. The fifth zone is composed of a zone that the average indoor temperature is in a range of 15°C~27°C and the average outdoor temperature is in a range of -10°C~0°C, and a zone that the average indoor temperature is in a range of 10°C~20°C and the average outdoor temperature is in a range of 0°C~20°C. And, the sixth zone is composed of a zone that the average indoor temperature is in a range of 5°C~15°C and the average outdoor temperature is in a range of -10°C~0°C, and a zone that the average indoor temperature is in a range of 5°C~10°C and the average outdoor temperature is in a range of 0°C~24°C.

The micro computer drives the multi-type air conditioner according to an average indoor temperature of indoor temperatures detected from the plural indoor temperature sensors and an average outdoor temperature of outdoor temperatures detected from the plural outdoor temperature sensors. Preferably, the average indoor temperature is a weighted average indoor temperature, and the average outdoor temperature is an arithmetic average outdoor temperature.

That is, when the average indoor temperature and the average outdoor temperature correspond to the first zone, the multi-type air conditioner is operated in a cooling mode for a preset time thereby to lower the average indoor temperature as much as a certain temperature. Then, it is judged whether the average outdoor temperature and the lowered average indoor temperature correspond to the second zone. If the average outdoor temperature and the lowered average indoor temperature correspond to the second zone, the air conditioner is test-operated in a test operation mode corresponding to the second zone. However, if the average outdoor temperature and the lowered average indoor temperature do not correspond to the second zone, the test-operation of the air conditioner is stopped and the stopped state of the air conditioner is displayed.

In a test-operation mode of the multi-type air conditioner when the average indoor temperature and the average outdoor temperature correspond to the second zone, only half of the plural indoor units are operated in a cooling mode for a certain time and the rest half of the plural indoor units are not operated. The indoor units may be operated for a certain number of times with alternation.

In a test-operation mode of the multi-type air conditioner when the average indoor temperature and the average outdoor temperature correspond to the third zone, all the plural indoor units are operated in a cooling mode for a certain time. It is also possible to operate some indoor units (for example, 50%) for a certain time before operating all the plural indoor units.

In a test-operation mode of the multi-type air conditioner when the average indoor temperature and the average outdoor temperature correspond to the fourth zone, all the plural indoor units are operated in a heating mode for a certain time. It is also possible to operate some indoor units (for example, 50%) for a certain time before operating all the plural indoor units.

In a test-operation mode of the multi-type air conditioner when the average indoor temperature and the average outdoor temperature correspond to the fifth zone, only half of the plural indoor units are operated in a heating mode for a certain time and the rest of the plural indoor units are not operated. The indoor units may be operated for a certain number of times with alternation.

When the average indoor temperature and the average outdoor temperature correspond to the sixth zone, the multi-type air conditioner is operated in a heating mode for a preset time thereby to increase the average indoor temperature as much as a certain temperature. Then, it is judged whether the average outdoor temperature and the increased average indoor temperature correspond to the fifth zone. If the average outdoor temperature and the increased average indoor temperature correspond to the fifth zone, the air conditioner is test-operated in a test operation mode corresponding to the fifth zone. However, if the average outdoor temperature and the increased average indoor temperature do not correspond to the fifth zone, the test-operation of the air conditioner is stopped and the stopped state of the air conditioner is displayed.

Then, the micro computer 100 compares data for indicating an operation state of the multi-type air conditioner test-operated in different test operation modes with a preset reference data, and judges whether the air conditioner is in an abnormal state on the basis of the comparison result.

For example, when an error between the data for indicating an operation state of the air conditioner and the preset reference data is more than 30% as the result of the comparison, the micro computer judges as that the multi-type air conditioner is in an abnormal state.

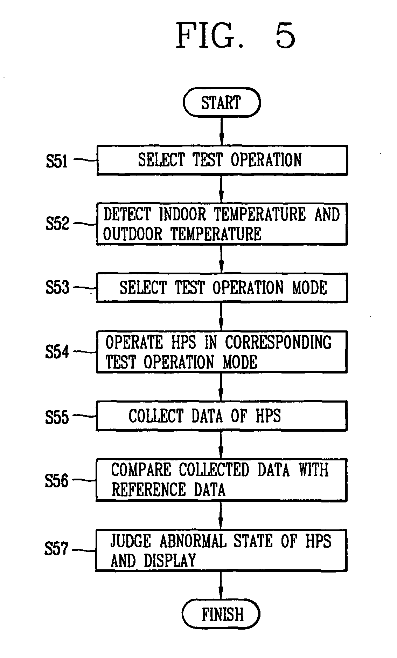

Hereinafter, an operation of the abnormal state detecting apparatus of a multi-type air conditioner will be explained with reference to FIG. 5.

FIG. 5 is a flowchart showing a method for detecting an abnormal state of the multi-type air conditioner according to the present invention.

As shown, the method for detecting an abnormal state of a multi-type air conditioner comprises a user's selecting a test operation (S1) and then detecting plural indoor temperatures of indoor zones where a plurality of indoor units are installed and plural outdoor temperatures of outdoor zones where a plurality of outdoor units are installed (S2), selecting a corresponding test operation mode among a plurality of test operation modes preset according to an average indoor temperature of the detected plural indoor temperatures and an average outdoor temperature of the detected plural outdoor temperatures (S3), test-operating the multi-type air conditioner according to the selected test operation mode (S4) and collecting data showing an operation state of the test-operated air conditioner (S5), and comparing the collected data with a preset reference data (S6) and judging an abnormal state of the air conditioner based on the comparison result (S7).

The method for detecting an abnormal state of a multi-type air conditioner further comprises previously storing ideal data that indicates a normal operation state of the air conditioner as a reference data, and previously storing information of first to sixth zones divided according to the average indoor temperature and the average outdoor temperature and having different test operation modes. Also, the method for detecting an abnormal state of a multi-type air conditioner further comprises displaying an abnormal state of the air conditioner judged by the micro computer 100.

The multi-type air conditioner can be realized as several systems. However, the multi-type air conditioner according to the present invention is realized as a heat pump system (HPS). Hereinafter, the multi-type air conditioner realized as a heat pump system will be explained.

Since the multi-type air conditioner according to the present invention is realized as a heat pump system, data for showing an operation state of the air conditioner includes characteristic values of the heat pump system operated in a cooling mode or a heating mode, that is, a value of a high pressure (P_{H}), a value of a low pressure (P_{L}), a value of a compressor discharge temperature, a value of a liquid pipe temperature, a value of a degree of sub-cooling, a value of a degree of superheat, etc. Referring to FIG. 1, the value of a high pressure (P_{H}) denotes a value of a pressure between the check valve 33 and the four-way valve 21. The value of a low pressure (P_{L}) denotes a value of a pressure between the four-way valve 21 and the accumulator 27. Also, the value of a compressor discharge temperature is a value of a temperature between the first and second compressors 13a and 13b and the oil separator 31. The value of a compressor discharge temperature is measured only for compressors being operated, and the value of a liquid pipe temperature denotes a value of a temperature between the service valve 43a and the outdoor heat exchanger 25. The value of a degree of sub-cooling denotes a difference between the liquid pipe temperature and a saturated temperature corresponding to the value of a high pressure P_{H} on a pressure-enthalpy diagram. Also, the value of degree of superheat denotes a difference between a saturated temperature corresponding to the value of a low pressure P_{L} and a suction temperature of the compressor on a pressure-enthalpy diagram. The suction temperature of the compressor is measured at an inlet of the first compressor 13a, an inlet of the second compressor 13b, or an inlet of the accumulator 27.

The method for detecting an abnormal state of a multi-type air conditioner according to the present invention will be explained in more detail.

Ideal data at the time of operating the heat pump system is detected by an experiment or by a theory, and the detected ideal data is preset as a reference data.

Under the state, if a user selects a test-operation of the multi-type air conditioner (S1), the plural indoor temperature sensors (RT1~RTn) detect indoor temperatures of the indoor zones where the plural indoor units are installed and the plural outdoor temperature sensors (0T1~0Tn) detect outdoor temperatures of the outdoor zones where the plural outdoor units are installed (S2). The user's test operation selection is performed through a key inputting unit of a controller of the outdoor unit or through an external person computer (PC), or through a mobile communication terminal.

Then, the micro computer 100 calculates a weighted average indoor temperature of the detected indoor temperatures and an arithmetic average outdoor temperature of the detected outdoor temperatures, and selects a test operation mode of the multi-type air conditioner according to the calculated average indoor temperature and the average outdoor temperature with reference to FIG. 4 (S3). The test operation mode is divided into 6 modes according to that the average indoor temperature and the average outdoor temperature belong to which zone among the first to sixth zones of FIG. 4.

Then, the micro computer 100 operates the multi-type air conditioner in the selected test operation mode (S4). That is, when the average indoor temperature and the average outdoor temperature correspond to the first zone, the multi-type air conditioner is operated in a cooling mode for a preset time thereby to lower the average indoor temperature as much as a certain temperature. Then, it is judged whether the average outdoor temperature and the lowered average indoor temperature correspond to the second zone. If the average outdoor temperature and the lowered average indoor temperature correspond to the second zone, the air conditioner is test-operated in a test operation mode corresponding to the second zone. However, if the average outdoor temperature and the lowered average indoor temperature do not correspond to the second zone, the test-operation of the air conditioner is stopped and the stopped state of the air conditioner is displayed.

In a test-operation mode of the multi-type air conditioner when the average indoor temperature and the average outdoor temperature correspond to the second zone, only half of the plural indoor units are operated in a cooling mode for a certain time and the rest half of the plural indoor units are not operated. A step for operating the indoor units for a certain number of times with alternation is further comprised.

In a test-operation mode of the multi-type air conditioner when the average indoor temperature and the average outdoor temperature correspond to the third zone, all the plural indoor units are operated in a cooling mode for a certain time. It is also possible to operate some indoor units (for example, 50%) for a certain time before operating all the plural indoor units.

In a test-operation mode of the multi-type air conditioner when the average indoor temperature and the average outdoor temperature correspond to the fourth zone, all the plural indoor units are operated in a heating mode for a certain time. It is also possible to operate some indoor units (for example, 50%) for a certain time before operating all the plural indoor units.

In a test-operation mode of the multi-type air conditioner when the average indoor temperature and the average outdoor temperature correspond to the fifth zone, only half of the plural indoor units are operated in a heating mode for a certain time and the rest of the plural indoor units are not operated. A step for operating the indoor units for a certain number of times with alternation is further comprised.

When the average indoor temperature and the average outdoor temperature correspond to the sixth zone, the multi-type air conditioner is operated in a heating mode for a preset time thereby to increase the average indoor temperature as much as a certain temperature. Then, it is judged whether the average outdoor temperature and the increased average indoor temperature correspond to the fifth zone. If the average outdoor temperature and the increased average indoor temperature correspond to the fifth zone, the air conditioner is test-operated in a test operation mode corresponding to the fifth zone. However, if the average outdoor temperature and the increased average indoor temperature do not correspond to the fifth zone, the test-operation of the air conditioner is stopped and the stopped state of the air conditioner is displayed.

Then, the micro computer 100 collects data showing an operation state of the multi-type air conditioner operated in the selected test operation mode (S5), and compares the collected data with a preset reference data (S6), thereby judging an abnormal state of the air conditioner based on the comparison result. Then, the micro computer 100 displays the abnormal state of the multi-type air conditioner (S7). The micro computer 100 stops the multi-type air conditioner when it is judged that the air conditioner is in an abnormal state. On the contrary, when it is judged that the air conditioner is in a normal state, the micro computer 100 stops the test operation of the air conditioner after collecting oil inside the air conditioner. Since the multi-type air conditioner according to the present invention is realized as a heat pump system, data for showing an operation state of the air conditioner includes characteristic values of the heat pump system operated in a cooling mode or a heating mode, that is, a value of a high pressure (P_{H}), a value of a low pressure (P_{L}), a value of a compressor discharge temperature, a value of a liquid pipe temperature, a value of a degree of sub-cooling, a value of a degree of superheat, etc.

Then, the micro computer 100 compares the data for showing an operation state of the multi-type air conditioner test-operated by the several test-operation modes with a preset reference data, and judges an abnormal state of the multi-type air conditioner on the basis of the comparison result.

For example, when an error between the data for indicating an operation state of the air conditioner and the preset reference data is more than 30% as the result of the comparison, the micro computer judges as that the multi-type air conditioner is in an abnormal state.

As aforementioned, the multi-type air conditioner is operated in different test modes according to the indoor temperatures and the outdoor temperatures, and the data for showing an operation state of the multi-type air conditioner is compared with the preset reference data, thereby judging an abnormal state of the multi-type air conditioner.

## Claims

1. An abnormal state detecting apparatus of a multi-type air conditioner comprising:
a plurality of indoor temperature sensors for detecting indoor temperatures of indoor zones where a plurality of indoor units are positioned;
a plurality of outdoor temperature sensors for detecting outdoor temperatures of outdoor zones where a plurality of outdoor units are positioned; and
a micro computer for judging an abnormal state of the multi-type air conditioner by selecting a corresponding test operation mode among a plurality of test operation modes preset according to an average indoor temperature of the detected plural indoor temperatures and an average outdoor temperature of the detected plural outdoor temperatures, by test-operating the multi-type air conditioner according to the selected test operation mode, then by collecting data showing an operation state of the test-operated air conditioner, and then by comparing the collected data with a preset reference data.

2. The apparatus of claim 1, wherein the average indoor temperature is a weighted average indoor temperature of the detected plural indoor temperatures, and the average outdoor temperature is an arithmetic average outdoor temperature of the detected plural outdoor temperatures.

3. The apparatus of claim 1, wherein the data is characteristic values of the multi-type air conditioner operated in a cooling mode or a heating mode, that is, a value of a high pressure, a value of a low pressure, a value of a compressor discharge temperature, a value of a liquid pipe temperature, a value of a degree of sub-cooling, and a value of a degree of superheat.

4. The apparatus of claim 1, wherein the micro computer stops the multi-type air conditioner when it is judged that the air conditioner is in an abnormal state, and when it is judged that the air conditioner is in a normal state, the micro computer stops the test operation of the air conditioner after collecting oil inside the air conditioner.

5. The apparatus of claim 1, further comprising a displaying unit for displaying an abnormal state of the multi-type air conditioner.

6. The apparatus of claim 1, further comprising a storing unit for previously storing ideal data that indicates a normal operation state of the air conditioner as a reference data, and for previously storing information of first to sixth zones divided according to the average indoor temperature and the average outdoor temperature and having different test operation modes.

7. The apparatus of claim 6, wherein the first zone comprises a zone that an average indoor temperature is 32° or more than and an average outdoor temperature is in a range of 0°C∼43°C, and a zone that the average indoor temperature is in a range of 27°C∼32°C and the average outdoor temperature is in a range of 35°C ∼43°C,
the second zone comprises a zone that the average indoor temperature is in a range of 20°C∼27°C and the average outdoor temperature is in a range of 24°C∼43°C, and a zone that the average indoor temperature is in a range of 27°C∼32°C and the average outdoor temperature is in a range of 24°C ∼35°C,
the third zone comprises a zone that the average indoor temperature is in a range of 20°C∼27°C and the average outdoor temperature is in a range of 12°C∼24°C.
the fourth zone comprises a zone that the average indoor temperature is in a range of 20°C∼27°C and the average outdoor temperature is in a range of 0°C∼12°C,
the fifth zone comprises a zone that the average indoor temperature is in a range of 15°C∼27°C and the average outdoor temperature is in a range of - 10°C∼0°C, and a zone that the average indoor temperature is in a range of 10°C∼20°C and the average outdoor temperature is in a range of 0°C∼20°C, and
the sixth zone comprises a zone that the average indoor temperature is in a range of 5°C∼15°C and the average outdoor temperature is in a range of - 10°C∼0°C, and a zone that the average indoor temperature is in a range of 5°C∼10°C and the average outdoor temperature is in a range of 0°C∼24°C.

8. The apparatus of claim 6, wherein when the average indoor temperature and the average outdoor temperature correspond to the first zone, the micro computer operates the multi-type air conditioner in a cooling mode for a preset time thereby to lower the average indoor temperature as much as a certain temperature, then judges whether the average outdoor temperature and the lowered average indoor temperature correspond to the second zone, if the average outdoor temperature and the lowered average indoor temperature correspond to the second zone, test-operates the multi-type air conditioner in a test operation mode corresponding to the second zone, and if the average outdoor temperature and the lowered average indoor temperature do not correspond to the second zone, stops the test-operation of the air conditioner and displays the stopped state of the air conditioner;
when the average indoor temperature and the average outdoor temperature correspond to the second zone, the micro computer operates only half of the plural indoor units in a cooling mode for a certain time and does not operate the rest half of the plural indoor units;
when the average indoor temperature and the average outdoor temperature correspond to the third zone, the micro computer operates all the plural indoor units in a cooling mode for a certain time;
when the average indoor temperature and the average outdoor temperature correspond to the fourth zone, the micro computer operates all the plural indoor units in a heating mode for a certain time;
when the average indoor temperature and the average outdoor temperature correspond to the fifth zone, the micro computer operates only half of the plural indoor units in a heating mode for a certain time and does not operate the rest of the plural indoor units; and
when the average indoor temperature and the average outdoor temperature correspond to the sixth zone, the micro computer operates the multi-type air conditioner in a heating mode for a preset time thereby to increase the average indoor temperature as much as a certain temperature, then judges whether the average outdoor temperature and the increased average indoor temperature correspond to the fifth zone, if the average outdoor temperature and the increased average indoor temperature correspond to the fifth zone, test-operates the multi-type air conditioner in a test operation mode corresponding to the fifth zone, and if the average outdoor temperature and the increased average indoor temperature do not correspond to the fifth zone, stops the test-operation of the multi-type air conditioner and displays the stopped state of the air conditioner.

9. The apparatus of claim 8, wherein when the average indoor temperature and the average outdoor temperature correspond to the second zone or the fifth zone, the micro computer operates only half of the plural indoor units in a cooling mode or a heating mode for a certain time and does not operate the rest of the plural indoor units with alternation for a certain number of times.

10. The apparatus of claim 8, further comprising when the average indoor temperature and the average outdoor temperature correspond to the third zone or the fourth zone, the micro computer operates some of the plural indoor units before operating all the plural indoor units in a cooling mode or in a heating mode for a certain time.

11. A method for detecting an abnormal state of a multi-type air conditioner comprising:
a user's selecting a test operation, and then detecting plural indoor temperatures of indoor zones where a plurality of indoor units are installed and plural outdoor temperatures of outdoor zones where a plurality of outdoor units are installed;
selecting a corresponding test operation mode among a plurality of test operation modes preset according to an average indoor temperature of the detected plural indoor temperatures and an average outdoor temperature of the detected plural outdoor temperatures;
test-operating the multi-type air conditioner according to the selected test operation mode, and collecting data showing an operation state of the test-operated air conditioner; and
comparing the collected data with a preset reference data and judging an abnormal state of the air conditioner based on the comparison result.

12. The method of claim 11, wherein the average indoor temperature is a weighted average indoor temperature of the detected plural indoor temperatures, and the average outdoor temperature is an arithmetic average outdoor temperature of the detected plural outdoor temperatures.

13. The method of claim 11, wherein the data is characteristic values of the multi-type air conditioner operated in a cooling mode or a heating mode, that is, a value of a high pressure, a value of a low pressure, a value of a compressor discharge temperature, a value of a liquid pipe temperature, a value of a degree of sub-cooling, and a value of a degree of superheat.

14. The method of claim 11, wherein the test operation modes are determined according to that the average indoor temperature and the average outdoor temperature belong to which zone among the first to sixth zones.

15. The method of claim 14, wherein the first zone comprises a zone that an average indoor temperature is 32° or more than and an average outdoor temperature is in a range of 0°C∼43°C, and a zone that the average indoor temperature is in a range of 27°C∼32°C and the average outdoor temperature is in a range of 35°C ∼43°C,
the second zone comprises a zone that the average indoor temperature is in a range of 20°C∼27°C and the average outdoor temperature is in a range of 24°C∼43°C, and a zone that the average indoor temperature is in a range of 27°C∼32°C and the average outdoor temperature is in a range of 24°C ∼35°C,
the third zone comprises a zone that the average indoor temperature is in a range of 20°C∼27°C and the average outdoor temperature is in a range of 12°C∼24°C,
the fourth zone comprises a zone that the average indoor temperature is in a range of 20°C∼27°C and the average outdoor temperature is in a range of 0°C∼12°C,
the fifth zone comprises a zone that the average indoor temperature is in a range of 15°C∼27°C and the average outdoor temperature is in a range of - 10°C∼0°C, and a zone that the average indoor temperature is in a range of 10°C∼20°C and the average outdoor temperature is in a range of 0°C∼20°C, and
the sixth zone comprises a zone that the average indoor temperature is in a range of 5°C∼15°C and the average outdoor temperature is in a range of - 10°C∼0°C, and a zone that the average indoor temperature is in a range of 5°C∼10°C and the average outdoor temperature is in a range of 0°C∼24°C.

16. The method of claim 14, wherein when the average indoor temperature and the average outdoor temperature correspond to the first zone, the multi-type air conditioner is operated in a cooling mode for a preset time thereby to lower the average indoor temperature as much as a certain temperature, then is judged whether the average outdoor temperature and the lowered average indoor temperature correspond to the second zone, if the average outdoor temperature and the lowered average indoor temperature correspond to the second zone, the multi-type air conditioner is test-operated in a test operation mode corresponding to the second zone, and if the average outdoor temperature and the lowered average indoor temperature do not correspond to the second zone, the test-operation of the air conditioner is stopped and the stopped state of the air conditioner is displayed.

17. The method of claim 14, wherein when the average indoor temperature and the average outdoor temperature correspond to the second zone, only half of the plural indoor units are operated in a cooling mode for a certain time and the rest half of the plural indoor units are not operated for the certain time.

18. The method of claim 17, further comprising alternately performing each operation for a certain number of times.

19. The method of claim 14, wherein when the average indoor temperature and the average outdoor temperature correspond to the third zone, all the plural indoor units are operated in a cooling mode for a certain time;

20. The method of claim 19, further comprising operating some of the plural indoor units before operating all the plural indoor units in a cooling mode for a certain time.

21. The method of claim 14, wherein when the average indoor temperature and the average outdoor temperature correspond to the fourth zone, all the plural indoor units are operated in a heating mode for a certain time.

22. The method of claim 21, further comprising operating some of the plural indoor units before operating all the plural indoor units in a heating mode for a certain time.

23. The method of claim 14, wherein when the average indoor temperature and the average outdoor temperature correspond to the fifth zone, only half of the plural indoor units are operated in a heating mode for a certain time and the rest of the plural indoor units are not operated for the certain time.

24. The method of claim 23, further comprising alternately performing each operation for a certain number of times.

25. The method of claim 14, wherein when the average indoor temperature and the average outdoor temperature correspond to the sixth zone, the multi-type air conditioner is operated in a heating mode for a preset time thereby to increase the average indoor temperature as much as a certain temperature, then is judged whether the average outdoor temperature and the increased average indoor temperature correspond to the fifth zone, if the average outdoor temperature and the increased average indoor temperature correspond to the fifth zone, the multi-type air conditioner is test-operated in a test operation mode corresponding to the fifth zone, and if the average outdoor temperature and the increased average indoor temperature do not correspond to the fifth zone, the test-operation of the multi-type air conditioner is finished and the stopped state of the air conditioner is displayed.

26. The method of claim 11, further comprising stopping the multi-type air conditioner when it is judged that the air conditioner is in an abnormal state, and stopping the test operation of the air conditioner after collecting oil inside the air conditioner when it is judged that the air conditioner is in a normal state.

27. The method of claim 11, further comprising previously storing ideal data that indicates a normal operation state of the air conditioner as a reference data, and previously storing information of first to sixth zones divided according to the average indoor temperature and the average outdoor temperature and having different test operation modes.

## Patentansprüche

1. Vorrichtung zum Detektieren eines anomalen Zustandes einer Mehrfachtyp-Klimaanlage, die umfasst:
mehrere Innentemperatursensoren zum Detektieren von Innentemperaturen von Innenzonen, in denen mehrere Inneneinheiten angeordnet sind;
mehrere Außentemperatursensoren zum Detektieren von Außentemperaturen von Außenzonen, in denen mehrere Außeneinheiten angeordnet sind; und
einen Mikrocomputer zum Beurteilen eines anomalen Zustandes der Mehrfachtyp-Klimaanlage durch Auswählen einer entsprechenden Testbetriebsart aus mehreren Testbetriebsarten, die gemäß einer mittleren Innentemperatur der detektierten mehreren Innentemperaturen und einer mittleren Außentemperatur der detektierten mehreren Außentemperaturen vorgegeben sind, durch Testbetrieb der Mehrfachtyp-Klimaanlage gemäß der ausgewählten Testbetriebsart, dann durch Sammeln von Daten, die einen Betriebszustand der im Test betriebenen Klimaanlage zeigen, und dann durch Vergleichen der gesammelten Daten mit vorgegebenen Referenzdaten.

2. Vorrichtung nach Anspruch 1, wobei die mittlere Innentemperatur eine gewichtete mittlere Innentemperatur der detektierten mehreren Innentemperaturen ist und die mittlere Außentemperatur eine arithmetische mittlere Außentemperatur der detektierten mehreren Außentemperaturen ist.

3. Vorrichtung nach Anspruch 1, wobei die Daten charakteristische Werte der Mehrfachtyp-Klimaanlage sind, die in einer Kühlbetriebsart oder einer Heizbetriebsart betrieben wird, das heißt ein Wert eines hohen Drucks, ein Wert eines niedrigen Drucks, ein Wert einer Kompressorauslasstemperatur, ein Wert einer Flüssigkeitsrohrtemperatur, ein Wert eines Grades an Unterkühlung und ein Wert eines Grades an Überhitzung.

4. Vorrichtung nach Anspruch 1, wobei der Mikrocomputer die Mehrfachtyp-Klimaanlage stoppt, wenn beurteilt wird, dass sich die Klimaanlage in einem anomalen Zustand befindet, und wenn beurteilt wird, dass sich die Klimaanlage in einem normalen Zustand befindet, der Mikrocomputer den Testbetrieb der Klimaanlage nach dem Sammeln von Öl innerhalb der Klimaanlage stoppt.

5. Vorrichtung nach Anspruch 1, die ferner eine Anzeigeeinheit zum Anzeigen eines anomalen Zustandes der Mehrfachtyp-Klimaanlage umfasst.

6. Vorrichtung nach Anspruch 1, die ferner eine Speichereinheit zum vorherigen Speichern von idealen Daten, die einen normalen Betriebszustand der Klimaanlage angeben, als Referenzdaten und zum vorherigen Speichern von Informationen einer ersten bis sechsten Zone, die gemäß der mittleren Innentemperatur und der mittleren Außentemperatur unterteilt sind und verschiedene Testbetriebsarten besitzen, umfasst.

7. Vorrichtung nach Anspruch 6, wobei die erste Zone eine Zone, in der eine mittlere Innentemperatur 32° oder mehr ist und eine mittlere Außentemperatur in einem Bereich von 0 °C ∼ 43 °C liegt, und eine Zone, in der die mittlere Innentemperatur in einem Bereich von 27 °C ∼ 32 °C liegt und die mittlere Außentemperatur in einem Bereich von 35 °C ∼ 43 °C liegt, umfasst,
die zweite Zone eine Zone, in der die mittlere Innentemperatur in einem Bereich von 20 °C ∼ 27 °C liegt und die mittlere Außentemperatur in einem Bereich von 24 °C ∼ 43 °C liegt, und eine Zone, in der die mittlere Innentemperatur in einem Bereich von 27 °C ∼ 32 °C liegt und die mittlere Außentemperatur in einem Bereich von 24 °C ∼ 35 °C liegt, umfasst,
die dritte Zone eine Zone umfasst, in der die mittlere Innentemperatur in einem Bereich von 20 °C ∼ 27 °C liegt und die mittlere Außentemperatur in einem Bereich von 12 °C ∼ 24 °C liegt,
die vierte Zone eine Zone umfasst, in der die mittlere Innentemperatur in einem Bereich von 20 °C ∼ 27 °C liegt und die mittlere Außentemperatur in einem Bereich von 0 °C ∼ 12 °C liegt,
die fünfte Zone eine Zone, in der die mittlere Innentemperatur in einem Bereich von 15 °C ∼ 27 °C liegt und die mittlere Außentemperatur in einem Bereich von -10 °C ∼ 0 °C liegt, und eine Zone, in der die mittlere Innentemperatur in einem Bereich von 10 °C ∼ 20 °C liegt und die mittlere Außentemperatur in einem Bereich von 0 °C ∼ 20 °C liegt, umfasst, und
die sechste Zone eine Zone, in der die mittlere Innentemperatur in einem Bereich von 5 °C ∼ 15 °C liegt und die mittlere Außentemperatur in einem Bereich von -10 °C ∼ 0 °C liegt, und eine Zone, in der die mittlere Innentemperatur in einem Bereich von 5 °C ∼ 10 °C liegt und die mittlere Außentemperatur in einem Bereich von 0 °C ∼ 24 °C liegt, umfasst.

8. Vorrichtung nach Anspruch 6, wobei, wenn die mittlere Innentemperatur und die mittlere Außentemperatur der ersten Zone entsprechen, der Mikrocomputer die Mehrfachtyp-Klimaanlage für eine vorgegebene Zeit in einer Kühlbetriebsart betreibt, um dadurch die mittlere Innentemperatur um so viel wie eine bestimmte Temperatur zu senken, dann beurteilt, ob die mittlere Außentemperatur und die gesenkte mittlere Innentemperatur der zweiten Zone entsprechen, wenn die mittlere Außentemperatur und die gesenkte mittlere Innentemperatur der zweiten Zone entsprechen, die Mehrfachtyp-Klimaanlage in einer Testbetriebsart, die der zweiten Zone entspricht, im Test betreibt, und wenn die mittlere Außentemperatur und die gesenkte mittlere Innentemperatur nicht der zweiten Zone entsprechen, den Testbetrieb der Klimaanlage stoppt und den gestoppten Zustand der Klimaanlage anzeigt,
wenn die mittlere Innentemperatur und die mittlere Außentemperatur der zweiten Zone entsprechen, der Mikrocomputer nur die Hälfte der mehreren Inneneinheiten für eine bestimmte Zeit in einer Kühlbetriebsart betreibt und die restliche Hälfte der mehreren Inneneinheiten nicht betreibt;
wenn die mittlere Innentemperatur und die mittlere Außentemperatur der dritten Zone entsprechen, der Mikrocomputer alle mehreren Inneneinheiten für eine bestimmte Zeit in einer Kühlbetriebsart betreibt;
wenn die mittlere Innentemperatur und die mittlere Außentemperatur der vierten Zone entsprechen, der Mikrocomputer alle mehreren Inneneinheiten für eine bestimmte Zeit in einer Heizbetriebsart betreibt;
wenn die mittlere Innentemperatur und die mittlere Außentemperatur der fünften Zone entsprechen, der Mikrocomputer nur die Hälfte der mehreren Inneneinheiten für eine bestimmte Zeit in einer Heizbetriebsart betreibt und den Rest der mehreren Inneneinheiten nicht betreibt; und
wenn die mittlere Innentemperatur und die mittlere Außentemperatur der sechsten Zone entsprechen, der Mikrocomputer die Mehrfachtyp-Klimaanlage für eine vorgegebene Zeit in einer Heizbetriebsart betreibt, um dadurch die mittlere Innentemperatur um so viel wie eine bestimmte Temperatur zu erhöhen, dann beurteilt, ob die mittlere Außentemperatur und die erhöhte mittlere Innentemperatur der fünften Zone entsprechen, wenn die mittlere Außentemperatur und die erhöhte mittlere Innentemperatur der fünften Zone entsprechen, die Mehrfachtyp-Klimaanlage in einer Testbetriebsart, die der fünften Zone entspricht, im Test betreibt, und wenn die mittlere Außentemperatur und die erhöhte mittlere Innentemperatur nicht der fünften Zone entsprechen, den Testbetrieb der Mehrfachtyp-Klimaanlage stoppt und den gestoppten Zustand der Klimaanlage anzeigt.

9. Vorrichtung nach Anspruch 8, wobei, wenn die mittlere Innentemperatur und die mittlere Außentemperatur der zweiten Zone oder der fünften Zone entsprechen, der Mikrocomputer abwechselnd für eine bestimmte Anzahl von Malen nur die Hälfte der mehreren Inneneinheiten für eine bestimmte Zeit in einer Kühlbetriebsart oder einer Heizbetriebsart betreibt und den Rest der mehreren Inneneinheiten nicht betreibt.

10. Vorrichtung nach Anspruch 8, wobei ferner, wenn die mittlere Innentemperatur und die mittlere Außentemperatur der dritten Zone oder der vierten Zone entsprechen, der Mikrocomputer einige der mehreren Inneneinheiten betreibt, bevor er alle mehreren Inneneinheiten für eine bestimmte Zeit in einer Kühlbetriebsart oder in einer Heizbetriebsart betreibt.

11. Verfahren zum Detektieren eines anomalen Zustandes einer Mehrfachtyp-Klimaanlage, das umfasst:
Auswählen eines Testbetriebs durch einen Benutzer und dann Detektieren von mehreren Innentemperaturen von Innenzonen, in denen mehrere Inneneinheiten installiert sind, und von mehreren Außentemperaturen von Außenzonen, in denen mehrere Außeneinheiten installiert sind;
Auswählen einer entsprechenden Testbetriebsart aus mehreren Testbetriebsarten, die gemäß einer mittleren Innentemperatur der detektierten mehreren Innentemperaturen und einer mittleren Außentemperatur der detektierten mehreren Außentemperaturen vorgegeben sind;
Testbetrieb der Mehrfachtyp-Klimaanlage gemäß der ausgewählten Testbetriebsart und Sammeln von Daten, die einen Betriebszustand der im Test betriebenen Klimaanlage zeigen; und
Vergleichen der gesammelten Daten mit vorgegebenen Referenzdaten und Beurteilen eines anomalen Zustandes der Klimaanlage auf der Basis des Vergleichsergebnisses.

12. Verfahren nach Anspruch 11, wobei die mittlere Innentemperatur eine gewichtete mittlere Innentemperatur der detektierten mehreren Innentemperaturen ist und die mittlere Außentemperatur eine arithmetische mittlere Außentemperatur der detektierten mehreren Außentemperaturen ist.

13. Verfahren nach Anspruch 11, wobei die Daten charakteristische Werte der Mehrfachtyp-Klimaanlage sind, die in einer Kühlbetriebsart oder einer Heizbetriebsart betrieben wird, das heißt, ein Wert eines hohen Drucks, ein Wert eines niedrigen Drucks, ein Wert einer Kompressorauslasstemperatur, ein Wert einer Flüssigkeitsrohrtemperatur, ein Wert eines Grades an Unterkühlung und ein Wert eines Grades an Überhitzung.

14. Verfahren nach Anspruch 11, wobei die Testbetriebsarten demgemäß bestimmt werden, zu welcher Zone unter der ersten bis sechsten Zone die mittlere Innentemperatur und die mittlere Außentemperatur gehören.

15. Verfahren nach Anspruch 14, wobei die erste Zone eine Zone, in der eine mittlere Innentemperatur 32° oder mehr ist und eine mittlere Außentemperatur in einem Bereich von 0 °C ∼ 43 °C liegt, und eine Zone, in der die mittlere Innentemperatur in einem Bereich von 27 °C ∼ 32 °C liegt und die mittlere Außentemperatur in einem Bereich von 35 °C ∼ 43 °C liegt, umfasst,
die zweite Zone eine Zone, in der die mittlere Innentemperatur in einem Bereich von 20 °C ∼ 27 °C liegt und die mittlere Außentemperatur in einem Bereich von 24 °C ∼ 43 °C liegt, und eine Zone, in der die mittlere Innentemperatur in einem Bereich von 27 °C ∼ 32 °C liegt und die mittlere Außentemperatur in einem Bereich von 24 °C ∼ 35 °C liegt, umfasst,
die dritte Zone eine Zone umfasst, in der die mittlere Innentemperatur in einem Bereich von 20 °C ∼ 27 °C liegt und die mittlere Außentemperatur in einem Bereich von 12 °C ∼ 24 °C liegt,
die vierte Zone eine Zone umfasst, in der die mittlere Innentemperatur in einem Bereich von 20 °C ∼ 27 °C liegt und die mittlere Außentemperatur in einem Bereich von 0 °C ∼ 12 °C liegt,
die fünfte Zone eine Zone, in der die mittlere Innentemperatur in einem Bereich von 15 °C ∼ 27 °C liegt und die mittlere Außentemperatur in einem Bereich von -10 °C ∼ 0 °C liegt, und eine Zone, in der die mittlere Innentemperatur in einem Bereich von 10 °C ∼ 20 °C liegt und die mittlere Außentemperatur in einem Bereich von 0 °C ∼ 20 °C liegt, umfasst, und
die sechste Zone eine Zone, in der die mittlere Innentemperatur in einem Bereich von 5 °C ∼ 15 °C liegt und die mittlere Außentemperatur in einem Bereich von -10 °C ∼ 0 °C liegt, und eine Zone, in der die mittlere Innentemperatur in einem Bereich von 5 °C ∼ 10 °C liegt und die mittlere Außentemperatur in einem Bereich von 0 °C ∼ 24 °C liegt, umfasst

16. Verfahren nach Anspruch 14, wobei, wenn die mittlere Innentemperatur und die mittlere Außentemperatur der ersten Zone entsprechen, die Mehrfachtyp-Klimaanlage für eine vorgegebene Zeit in einer Kühlbetriebsart betrieben wird, um dadurch die mittlere Innentemperatur um so viel wie eine bestimmte Temperatur zu senken, dann beurteilt wird, ob die mittlere Außentemperatur und die gesenkte mittlere Innentemperatur der zweiten Zone entsprechen, wenn die mittlere Außentemperatur und die gesenkte mittlere Innentemperatur der zweiten Zone entsprechen, die Mehrfachtyp-Klimaanlage in einer Testbetriebsart, die der zweiten Zone entspricht, im Test betrieben wird, und wenn die mittlere Außentemperatur und die gesenkte mittlere Innentemperatur nicht der zweiten Zone entsprechen, der Testbetrieb der Klimaanlage gestoppt wird und der gestoppte Zustand der Klimaanlage angezeigt wird.

17. Verfahren nach Anspruch 14, wobei, wenn die mittlere Innentemperatur und die mittlere Außentemperatur der zweiten Zone entsprechen, nur die Hälfte der mehreren Inneneinheiten für eine bestimmte Zeit in einer Kühlbetriebsart betrieben wird und die restliche Hälfte der mehreren Inneneinheiten für die bestimmte Zeit nicht betrieben wird.

18. Verfahren nach Anspruch 17, das ferner das abwechselnde Durchführen jedes Betriebs für eine bestimmte Anzahl von Malen umfasst.

19. Verfahren nach Anspruch 14, wobei, wenn die mittlere Innentemperatur und die mittlere Außentemperatur der dritten Zone entsprechen, alle mehreren Inneneinheiten für eine bestimmte Zeit in einer Kühlbetriebsart betrieben werden.

20. Verfahren nach Anspruch 19, das ferner das Betreiben von einigen der mehreren Inneneinheiten vor dem Betreiben aller mehreren Inneneinheiten für eine bestimmte Zeit in einer Kühlbetriebsart umfasst.

21. Verfahren nach Anspruch 14, wobei, wenn die mittlere Innentemperatur und die mittlere Außentemperatur der vierten Zone entsprechen, alle mehreren Inneneinheiten für eine bestimmte Zeit in einer Heizbetriebsart betrieben werden.

22. Verfahren nach Anspruch 21, das ferner das Betreiben von einigen der mehreren Inneneinheiten vor dem Betreiben aller mehreren Inneneinheiten für eine bestimmte Zeit in einer Heizbetriebsart umfasst.

23. Verfahren nach Anspruch 14, wobei, wenn die mittlere Innentemperatur und die mittlere Außentemperatur der fünften Zone entsprechen, nur die Hälfte der mehreren Inneneinheiten für eine bestimmte Zeit in einer Heizbetriebsart betrieben wird und der Rest der mehreren Inneneinheiten für die bestimmte Zeit nicht betrieben wird.

24. Verfahren nach Anspruch 23, das ferner das abwechselnde Durchführen jedes Betriebs für eine bestimmte Anzahl von Malen umfasst.

25. Verfahren nach Anspruch 14, wobei, wenn die mittlere Innentemperatur und die mittlere Außentemperatur der sechsten Zone entsprechen, die Mehrfachtyp-Klimaanlage für eine vorgegebene Zeit in einer Heizbetriebsart betrieben wird, um dadurch die mittlere Innentemperatur um so viel wie eine bestimmte Temperatur zu erhöhen, dann beurteilt wird, ob die mittlere Außentemperatur und die erhöhte mittlere Innentemperatur der fünften Zone entsprechen, wenn die mittlere Außentemperatur und die erhöhte mittlere Innentemperatur der fünften Zone entsprechen, die Mehrfachtyp-Klimaanlage in einer Testbetriebsart, die der fünften Zone entspricht, im Test betrieben wird, und wenn die mittlere Außentemperatur und die erhöhte mittlere Innentemperatur nicht der fünften Zone entsprechen, der Testbetrieb der Mehrfachtyp-Klimaanlage beendet wird und der gestoppte Zustand der Klimaanlage angezeigt wird.

26. Verfahren nach Anspruch 11, das ferner das Stoppen der Mehrfachtyp-Klimaanlage, wenn beurteilt wird, dass sich die Klimaanlage in einem anomalen Zustand befindet, und das Stoppen des Testbetriebs der Klimaanlage nach dem Sammeln von Öl innerhalb der Klimaanlage, wenn beurteilt wird, dass sich die Klimaanlage in einem normalen Zustand befindet, umfasst.

27. Verfahren nach Anspruch 11, das ferner das vorherige Speichern von idealen Daten, die einen normalen Betriebszustand der Klimaanlage angeben, als Referenzdaten und das vorherige Speichern von Informationen der ersten bis sechsten Zone, die gemäß der mittleren Innentemperatur und der mittleren Außentemperatur unterteilt sind und verschiedene Testbetriebsarten besitzen, umfasst.

## Revendications

1. Dispositif de détection d'état anormal d'un climatiseur multitype comprenant :
une pluralité de capteurs de température intérieure pour détecter les températures intérieures de zones intérieures où sont placées une pluralité d'unités d'intérieur ;
une pluralité de capteurs de température extérieure pour détecter les températures extérieures de zones extérieures où sont placées une pluralité d'unités d'extérieur ; et
un micro-ordinateur pour déterminer un état anormal du climatiseur multitype en sélectionnant un mode de fonctionnement d'essai parmi une pluralité de modes de fonctionnement d'essai préréglés en fonction d'une température intérieure moyenne des différentes températures intérieures détectées et d'une température extérieure moyenne des différentes températures extérieures détectées, en faisant fonctionner en essai le climatiseur multitype selon le mode de fonctionnement d'essai sélectionné, puis en recueillant des données montrant un état de fonctionnement du climatiseur fonctionnant en essai, et enfin en comparant les données collectées avec des données de référence préétablies.

2. Dispositif selon la revendication 1, dans lequel la température intérieure moyenne est une température intérieure moyenne pondérée des différentes températures intérieures détectées, et la température extérieure moyenne est une température extérieure moyenne arithmétique des différentes températures extérieures détectées.

3. Dispositif selon la revendication 1, dans lequel les données sont des valeurs caractéristiques du climatiseur multitype fonctionnant dans un mode refroidissement ou dans un mode chauffage, à savoir une valeur de haute pression, une valeur de basse pression, une valeur de température de refoulement de compresseur, une valeur de température de tuyau de liquide, une valeur d'un degré de sous-refroidissement et une valeur d'un degré de surchauffe.

4. Dispositif selon la revendication 1, dans lequel le micro-ordinateur arrête le climatiseur multitype quand il est déterminé que le climatiseur est dans un état anormal, et quand il est déterminé que le climatiseur est dans un état normal, le micro-ordinateur arrête le fonctionnement d'essai du climatiseur après une collecte d'huile à l'intérieur du climatiseur.

5. Dispositif selon la revendication 1, comprenant en outre une unité d'affichage pour afficher un état anormal du climatiseur multitype.

6. Dispositif selon la revendication 1, comprenant en outre une unité de stockage pour stocker au préalable des données idéales qui indiquent un état de fonctionnement normal du climatiseur en tant que données de référence, et pour stocker au préalable des informations d'une première à une sixième zone divisées selon la température intérieure moyenne et selon la température extérieure moyenne et ayant différents modes de fonctionnement d'essai.

7. Dispositif selon la revendication 6, dans lequel la première zone comprend une zone dans laquelle la température intérieure moyenne est supérieure ou égale à 32° et la température extérieure moyenne est comprise dans l'intervalle de 0 °C à 43 °C, et une zone dans laquelle la température intérieure moyenne est comprise dans l'intervalle de 27 °C à 32 °C et la température extérieure moyenne est comprise dans un intervalle de 35 °C à 43 °C,
la deuxième zone comprend une zone dans laquelle la température intérieure moyenne est comprise dans l'intervalle de 20 °C à 27 °C et la température extérieure moyenne est comprise dans l'intervalle de 27 °C à 43 °C, et une zone dans laquelle la température intérieure moyenne est comprise dans l'intervalle de 27 °C à 32 °C et la température extérieure moyenne est comprise dans l'intervalle de 24 °C à 35 °C,
la troisième zone comprend une zone dans laquelle la température intérieure moyenne est comprise dans l'intervalle de 20 °C à 27 °C et la température extérieure moyenne est comprise dans l'intervalle de 12 °C à 24 °C,
la quatrième zone comprend une zone dans laquelle la température intérieure moyenne est comprise dans l'intervalle de 20 °C à 27 °C et la température extérieure moyenne est comprise dans l'intervalle de 0 °C à 12 °C,
la cinquième zone comprend une zone dans laquelle la température intérieure moyenne est comprise dans l'intervalle de 15 °C à 27 °C et la température extérieure moyenne est comprise dans l'intervalle de -10 °C à 0 °C, et une zone dans laquelle la température intérieure moyenne est comprise dans l'intervalle de 10 °C à 20 °C et la température extérieure moyenne est comprise dans l'intervalle de 0 °C à 20 °C, et
la sixième zone comprend une zone dans laquelle la température intérieure moyenne est comprise dans l'intervalle de 5 °C à 15 °C et la température extérieure moyenne est comprise dans l'intervalle de -10 °C à 0 °C, et une zone dans laquelle la température intérieure moyenne est comprise dans l'intervalle de 5 °C à 10 °C et la température extérieure moyenne est comprise dans l'intervalle de 0 °C à 24 °C.

8. Dispositif selon la revendication 6, dans lequel la température intérieure moyenne et la température extérieure moyenne correspondent à la première zone, le micro-ordinateur fait fonctionner le climatiseur multitype dans un mode refroidissement pendant une durée prédéterminée afin d'abaisser la température intérieure moyenne jusqu'à une certaine température, puis il détermine si la température extérieure moyenne et la température intérieure moyenne abaissée correspondent à la deuxième zone, si la température extérieure moyenne et la température intérieure moyenne abaissée correspondent à la deuxième zone, il fait fonctionner en essai le climatiseur multitype dans un mode de fonctionnement d'essai correspondant à la deuxième zone, et si la température extérieure moyenne et la température intérieure moyenne abaissée ne correspondent pas à la deuxième zone, il arrête le fonctionnement en essai du climatiseur et affiche l'état arrêté du climatiseur ;
quand la température intérieure moyenne et la température extérieure moyenne correspondent à la deuxième zone, le micro-ordinateur ne fait fonctionner que la moitié des unités d'intérieur dans un mode refroidissement pendant un certain temps et ne fait pas fonctionner l'autre moitié des unités d'intérieur ;
quand la température intérieure moyenne et la température extérieure moyenne correspondent à la troisième zone, le micro-ordinateur fait fonctionner toutes les unités d'intérieur dans un mode refroidissement pendant un certain temps ;
quand la température intérieure moyenne et la température extérieure moyenne correspondent à la quatrième zone, le micro-ordinateur fait fonctionner toutes les unités d'intérieur dans un mode chauffage pendant un certain temps ;
quand la température intérieure moyenne et la température extérieure moyenne correspondent à la cinquième zone, le micro-ordinateur ne fait fonctionner que la moitié des unités d'intérieur dans un mode chauffage pendant un certain temps et ne fait pas fonctionner le reste des unités d'intérieur ; et
quand la température intérieure moyenne et la température extérieure moyenne correspondent à la sixième zone, le micro-ordinateur fait fonctionner le climatiseur multitype dans un mode chauffage pendant une durée prédéterminée afin d'augmenter la température intérieure moyenne jusqu'à une certaine température, puis il détermine si la température extérieure moyenne et la température intérieure moyenne augmentée correspondent à la cinquième zone, si la température extérieure moyenne et la température intérieure moyenne augmentée correspondent à la cinquième zone, il fait fonctionner en essai le climatiseur multitype dans un mode de fonctionnement d'essai correspondant à la cinquième zone, et si la température extérieure moyenne et la température intérieure moyenne augmentée ne correspondent pas à la cinquième zone, il arrête le fonctionnement en essai du climatiseur multitype et affiche l'état arrêté du climatiseur.

9. Dispositif selon la revendication 8, dans lequel, quand la température intérieure moyenne et la température extérieure moyenne correspondent à la deuxième zone ou à la cinquième zone, le micro-ordinateur ne fait fonctionner que la moitié des unités d'intérieur dans un mode refroidissement ou dans un mode chauffage pendant un certain temps et ne fait pas fonctionner le reste des unités d'intérieur avec alternance un certain nombre de fois.

10. Dispositif selon la revendication 8, comprenant en outre, quand la température intérieure moyenne et la température extérieure moyenne correspondent à la troisième zone ou à la quatrième zone, le fait que le micro-ordinateur fait fonctionner une partie des unités d'intérieur avant de faire fonctionner toutes les unités d'intérieur dans un mode refroidissement ou dans un mode chauffage pendant un certain temps.

11. Procédé de détection d'un état anormal d'un climatiseur multitype comprenant :
la sélection par un utilisateur d'un fonctionnement d'essai, puis la détection de plusieurs températures intérieures de zones intérieures dans lesquelles une pluralité d'unités d'intérieur sont installées et de plusieurs températures extérieures de zones extérieures dans lesquelles une pluralité d'unités d'extérieur sont installées ;
la sélection d'un mode de fonctionnement d'essai correspondant parmi une pluralité de modes de fonctionnement d'essai préréglés en fonction d'une température intérieure moyenne des différentes températures intérieures détectées et d'une température extérieure moyenne des différentes températures extérieures détectées ;
le fonctionnement en essai du climatiseur multitype selon le mode de fonctionnement d'essai sélectionné, puis la collecte des données montrant un état de fonctionnement du climatiseur fonctionnant en essai ; et
la comparaison des données collectées avec des données de référence préétablies et la détermination d'un état anormal du climatiseur basée sur le résultat de la comparaison.

12. Procédé selon la revendication 11, dans lequel la température intérieure moyenne est une température intérieure moyenne pondérée des différentes températures intérieures détectées, et la température extérieure moyenne est une température extérieure moyenne arithmétique des différentes températures extérieures détectées.

13. Procédé selon la revendication 11, dans lequel les données sont des valeurs caractéristiques du climatiseur multitype fonctionnant dans un mode refroidissement ou dans un mode chauffage, à savoir une valeur de haute pression, une valeur de basse pression, une valeur de température de refoulement de compresseur, une valeur de température de tuyau de liquide, une valeur d'un degré de sous-refroidissement et une valeur d'un degré de surchauffe.

14. Procédé selon la revendication 11, dans lequel les modes de fonctionnement d'essai sont déterminés en fonction des zones auxquelles appartiennent la température intérieure moyenne et la température extérieure moyenne parmi les six zones.

15. Procédé selon la revendication 14, dans lequel la première zone comprend une zone dans laquelle la température intérieure moyenne est supérieure ou égale à 32° et la température extérieure moyenne est comprise dans l'intervalle de 0 °C à 43 °C, et une zone dans laquelle la température intérieure moyenne est comprise dans l'intervalle de 27 °C à 32 °C et la température extérieure moyenne est comprise dans un intervalle de 35 °C à 43 °C,
la deuxième zone comprend une zone dans laquelle la température intérieure moyenne est comprise dans l'intervalle de 20 °C à 27 °C et la température extérieure moyenne est comprise dans l'intervalle de 27 °C à 43 °C, et une zone dans laquelle la température intérieure moyenne est comprise dans l'intervalle de 27 °C à 32 °C et la température extérieure moyenne est comprise dans l'intervalle de 24 °C à 35 °C,
la troisième zone comprend une zone dans laquelle la température intérieure moyenne est comprise dans l'intervalle de 20 °C à 27 °C et la température extérieure moyenne est comprise dans l'intervalle de 12 °C à 24 °C,
la quatrième zone comprend une zone dans laquelle la température intérieure moyenne est comprise dans l'intervalle de 20 °C à 27 °C et la température extérieure moyenne est comprise dans l'intervalle de 0 °C à 12 °C,
la cinquième zone comprend une zone dans laquelle la température intérieure moyenne est comprise dans l'intervalle de 15 °C à 27 °C et la température extérieure moyenne est comprise dans l'intervalle de -10 °C à 0 °C, et une zone dans laquelle la température intérieure moyenne est comprise dans l'intervalle de 10 °C à 20 °C et la température extérieure moyenne est comprise dans l'intervalle de 0 °C à 20 °C, et
la sixième zone comprend une zone dans laquelle la température intérieure moyenne est comprise dans l'intervalle de 5 °C à 15 °C et la température extérieure moyenne est comprise dans l'intervalle de -10 °C à 0 °C, et une zone dans laquelle la température intérieure moyenne est comprise dans l'intervalle de 5 °C à 10 °C et la température extérieure moyenne est comprise dans l'intervalle de 0 °C à 24 °C.

16. Procédé selon la revendication 14, dans lequel la température intérieure moyenne et la température extérieure moyenne correspondent à la première zone, le climatiseur multitype est mis en marche dans un mode refroidissement pendant une durée prédéterminée afin d'abaisser la température intérieure moyenne jusqu'à une certaine température, puis il est déterminé si la température extérieure moyenne et la température intérieure moyenne abaissée correspondent à la deuxième zone, si la température extérieure moyenne et la température intérieure moyenne abaissée correspondent à la deuxième zone, on fait fonctionner en essai le climatiseur multitype dans un mode de fonctionnement d'essai correspondant à la deuxième zone, et si la température extérieure moyenne et la température intérieure moyenne abaissée ne correspondent pas à la deuxième zone, le fonctionnement en essai du climatiseur est arrêté et l'état arrêté du climatiseur est affiché.

17. Procédé selon la revendication 14, dans lequel, quand la température intérieure moyenne et la température extérieure moyenne correspondent à la deuxième zone, on ne fait fonctionner que la moitié des unités d'intérieur dans un mode refroidissement pendant un certain temps et l'on ne fait pas fonctionner l'autre moitié des unités d'intérieur pendant ce même temps.

18. Procédé selon la revendication 17, comprenant en outre le fait d'exécuter chaque opération alternativement un certain nombre de fois.

19. Procédé selon la revendication 14, dans lequel, quand la température intérieure moyenne et la température extérieure moyenne correspondent à la troisième zone, on fait fonctionner toutes les unités d'intérieur dans un mode refroidissement pendant un certain temps.

20. Procédé selon la revendication 19, comprenant en outre le fait de faire fonctionner une partie des unités d'intérieur avant de faire fonctionner toutes les unités d'intérieur dans un mode refroidissement pendant un certain temps.

21. Procédé selon la revendication 14, dans lequel, quand la température intérieure moyenne et la température extérieure moyenne correspondent à la quatrième zone, on fait fonctionner toutes les unités d'intérieur dans un mode chauffage pendant un certain temps.

22. Procédé selon la revendication 21, comprenant en outre le fait de faire fonctionner une partie des unités d'intérieur avant de faire fonctionner toutes les unités d'intérieur dans un mode chauffage pendant un certain temps.

23. Procédé selon la revendication 14, dans lequel, quand la température intérieure moyenne et la température extérieure moyenne correspondent à la cinquième zone, on ne fait fonctionner que la moitié des unités d'intérieur dans un mode chauffage pendant un certain temps et l'on ne fait pas fonctionner le reste des unités d'intérieur pendant ce même temps.

24. Procédé selon la revendication 23, comprenant en outre le fait d'exécuter chaque opération alternativement un certain nombre de fois.

25. Procédé selon la revendication 14, dans lequel, quand la température intérieure moyenne et la température extérieure moyenne correspondent à la sixième zone, le climatiseur multitype est mis en marche dans un mode chauffage pendant une durée prédéterminée afin d'augmenter la température intérieure moyenne jusqu'à une certaine température, puis il est déterminé si la température extérieure moyenne et la température intérieure moyenne augmentée correspondent à la cinquième zone, si la température extérieure moyenne et la température intérieure moyenne augmentée correspondent à la cinquième zone, on fait fonctionner en essai le climatiseur multitype dans un mode de fonctionnement d'essai correspondant à la cinquième zone, et si la température extérieure moyenne et la température intérieure moyenne augmentée ne correspondent pas à la cinquième zone, le fonctionnement en essai du climatiseur est arrêté et l'état arrêté du climatiseur est affiché.

26. Procédé selon la revendication 11, comprenant en outre le fait d'arrêter le climatiseur multitype quand il est déterminé que le climatiseur est dans un état anormal, et d'arrêter le fonctionnement d'essai du climatiseur après une collecte d'huile à l'intérieur du climatiseur quand il est déterminé que le climatiseur est dans un état normal.

27. Procédé selon la revendication 11, comprenant en outre le fait de stocker au préalable des données idéales qui indiquent un état de fonctionnement normal du climatiseur en tant que données de référence, et de stocker au préalable des informations d'une première à une sixième zone divisées selon la température intérieure moyenne et selon la température extérieure moyenne et ayant différents modes de fonctionnement d'essai.
